# EUROPÄISCHE PATENTANMELDUNG

(11) **EP 0 663 424 A2**
(43) Veröffentlichungstag der Anmeldung: **19.07.1995**
(21) Anmeldenummer: 94117966.5
(22) Anmeldetag: 15.11.1994
(51) Int. Cl.: C08L 67/02, H01R 13/46, H01H 85/17, H01H 9/00

(54) **Verwendung einer Kunststoffmischung aus einem linearen, hochmolekularen Polyester und einem Olefincopolymeren**

(30) Priorität: 17.01.1994 DE 4401165
(71) Anmelder: HÜLS AKTIENGESELLSCHAFT, D-45764 Marl (DE)
(72) Erfinder: Peirick, Heinrich, D-48653 Coesfeld (DE); Schüler, Ralf, Dr., D-45659 Recklinghausen (DE); Szumigala, Jürgen, D-45699 Herten (DE)

(57) **Zusammenfassung**

Formteile auf Basis von linearen, hochmolekularen Polyestern werden häufig in der elektrotechnischen Industrie verwendet. Sehr nachteilig für die Verwendung des Werkstoffes ist die Kriechwegbildung auf der Oberfläche der Formteile. Die vorliegende Erfindung vermeidet die bekannten Nachteile durch Verwendung einer Kunststoffmischung aus
A. 60 bis 95 Gew.-% eines linearen, hochmolekularen Polyesters
und
B. 5 bis 40 Gew.-% eines Olefincopolymeren.

## Beschreibung

Gegenstand der Erfindung ist die Verwendung einer Kunststoffmischung aus einem linearen, hochmolekularen Polyester und einem Olefincopolymeren zur Herstellung von Formmassen mit hoher Vergleichszahl der Kriechwegbildung.

Lineare, hochmolekulare Polyester sind bekannte und bewährte Konstruktionswerkstoffe, die z. B. nach dem Spritzgieß- oder Extrusionsverfahren verarbeitet werden können. Daraus hergestellte Formteile werden in großem Umfang von der elektrotechnischen Industrie als Steckerleisten, Gehäuse, Schalter, Relaissockel etc. eingesetzt.

Nachteilig bei diesen Formteilen - insbesondere bei gefüllten und/oder verstärkten Formteilen - ist die Bildung von Kriechwegen. Diese entstehen bei einer Verschmutzung der Oberfläche der Formteile durch Elektrolyte unter Einwirkung von elektrischer Spannung.

Aufgabe der Erfindung war es, diese bekannten Nachteile zu vermindern bzw. zu vermeiden.

Dieses wird erfindungsgemäß erreicht durch Verwendung einer Kunststoffmischung aus
A. 60 bis 95 Gew.-% eines linearen, hochmolekularen Polyesters
und
B. 5 bis 40 Gew.-% eines Olefincopolymeren aufgebaut aus
   a. 50 bis 84,5 Gew.-% einer ungesättigten Verbindung mit 2 bis 6 C-Atomen in der Kohlenstoffkette
   b. 15 bis 35 Gew.-% eines Acrylates der Formel 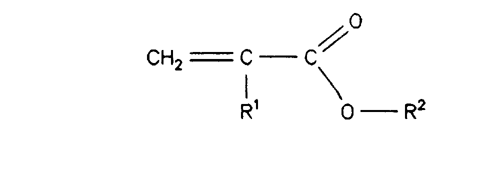 mit
      - R¹: = H oder C₁₋₆-Alkyl und
      - R²: = C₁₋₈-Alkyl
   c. 0,5 bis 15 Gew.-% einer ungesättigten Verbindung mit einer Säure-, Anhydrid- und/oder Epoxidgruppe als reaktiver Gruppe
zur Herstellung von Formmassen mit hoher Vergleichszahl der Kriechwegbildung.

Die Polyester werden durch Veresterung oder Umesterung und anschließende Polykondensation von aromatischen Dicarbonsäuren oder deren esterbildenden Derivaten sowie dem entsprechenden Diol hergestellt [Sorenson und Campbell, **Preparative Methods of Polymer Chemistry**, Inter-science Publishers Inc., (N.Y.), 1961, Seiten 111 bis 127; **Kunststoff-Handbuch**, Band VIII. C. Hanser Verlag München, 1973; J. Polym. Sci., Part A 1, 4, Seiten 1851 bis 1859, (1966)].

Die Reaktionstemperaturen liegen im Bereich von 160 bis 350 °C, vorzugsweise im Bereich von 170 bis 280 °C. Die genannte Reaktion wird unter Ausschluß von Sauerstoff durchgeführt. Aus diesem Grunde wird in einer Inertgasatmosphäre gearbeitet. Als Inertgas eignen sich z. B. Edelgase, Stickstoff, Kohlendioxid etc. Es wird bei Normaldruck oder im Vakuum gearbeitet. Bevorzugt wird die Polykondensationsstufe im Vakuum durchgeführt.

Als aromatische Dicarbonsäure kommt zur Hauptsache Terephthalsäure in Frage. Es können aber auch andere aromatische Dicarbonsäuren, wie z. B. Phthalsäure, Isophthalsäure, Naphthalindicarbonsäure u. ä. sowie deren Derivate, eingesetzt werden.

Bis zu 20 Mol-%, vorzugsweise bis zu 15 Mol-%, der aromatischen Dicarbonsäure in den Polyestern können durch an sich bekannte andere Dicarbonsäuren mit 2 bis 36 C-Atomen im Kohlenstoffgerüst ersetzt werden. Beispiele geeigneter Dicarbonsäuren sind Isophthalsäure, Phthalsäure, 1,4-Cyclohexandicarbonsäure, Adipinsäure, Sebazinsäure, Azelainsäure, Decandicarbonsäure und Dimerfettsäure.

Die Diolkomponente wird durch Alkandiole mit 2 bis 12 C-Atomen in der Kohlenstoffkette gebildet. Bevorzugt sind hierbei Ethylenglykol und 1.4-Butandiol.

Bis zu 20 Mol-%, vorzugsweise bis zu 15 Mol-%, der Diolkomponente können durch andere (cyclo)aliphatische Diole, wie beispielweise Neopentylglykol, 1.5-Pentandiol, 1.6-Hexandiol, 1.4- bzw. 1.3-Dimethylolcyclohexan oder 1.12-Dodecandiol ersetzt sein.

Unter den Begriff Polyester werden auch Blockcopolyester gerechnet. Derartige Produkte werden z. B. in Chimia 28(9), Seiten 544 bis 552 (1974) und in Rubber Chemistry and Technology 50, Seiten 688 bis 703 (1977) beschrieben. Diese Blockcopolyester enthalten neben den oben genannten aromatischen Dicarbonsäuren und Diolen ein Poly(oxyalkylen)diol mit einem Molgewicht im Bereich von etwa 600 bis 2 500. Bevorzugte Poly(oxyalkylen)diole sind Poly(oxyethylen)diol, Poly(oxypropylen)diol und Poly(oxytetramethylen)diol. Der Anteil der Poly(oxyalkylen)diole liegt im Bereich von 4 bis 40 Gew.-%, vorzugsweise von 10 bis 35 Gew.-% (bezogen auf den genannten Blockcopolyester).

Die Polyester weisen eine Lösungsviskosität (J-Wert) im Bereich von 80 bis 240 cm³/g, vorzugsweise von 90 bis 170 cm³/g, auf.

Es werden zur Hauptsache Poly(alkylenterephthalate), vorzugsweise Poly(ethylenterephthalat) und Poly(butylenterephthalat), eingesetzt.

Die erfindungsgemäß eingesetzten Olefincopolymeren sind aufgebaut aus
a. 50 bis 84,5 Gew.-%, vorzugsweise 60 bis 75 Gew.-%, einer ungesättigten Verbindung mit 2 bis 6, vorzugsweise 2 oder 3, C-Atomen in der Kohlenstoffkette,
b. 15 bis 35 Gew.-%, vorzugsweise 23 bis 30 Gew.-%, eines Acrylates der Formel 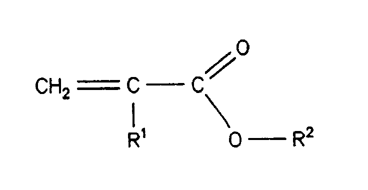 mit
   - R¹: = H oder C₁₋₆-Alkyl und
   - R²: = C₁₋₈-Alkyl,
c. 0,5 bis 15 Gew.-%, vorzugsweise 2 bis 10 Gew.-%, einer ungesättigten Verbindung mit einer Säure-, Anhydrid- und/oder Epoxigruppe als reaktiver Gruppe.

Beispielhaft seien für a. Ethylen, Propylen; für b. Acrylsäuremethyl-, -ethyl-, -propyl- oder -butylester, Acrylsäureethylhexylester, Ethylacrylsäuremethyl-, -propyl- bzw. -butylester und für c. Maleinsäure(anhydrid), Glycidyl-(meth)acrylsäuremethyl-, -propyl-, -butyl- oder -hexylester genannt.

Als besonders bevorzugte Olefincopolymere seien Ethylen/Acrylsäuremethylester/Maleinsäure(anhydrid)- oder Ethylen/Acrylsäuremethylester/Glycidylmethacrylsäuremethylester- oder Ethylen/Ethylacrylsäuremethylester/Maleinsäure(anhydrid)-Terpolymere angeführt.

Die erfindungsgemäßen Olefincopolymeren und ihre Herstellung sind bekannt.

Der Schmelzindex des Olefincopolymeren liegt im Bereich von 2 bis 12, vorzugsweise 4 bis 8 g/10 min.

Die Herstellung der Kunststoffmischung erfolgt nach üblichen und bekannten Verfahren, z. B. durch Schmelzemischen der beiden Komponenten in einem gut knetenden Mischaggregat, wie z. B. einem Doppelschneckenkneter bei Temperaturen, die sich nach den Schmelzpunkten der Komponenten richten, im allgemeinen bei Temperaturen zwischen 220 und 300 °C.

Die Kunststoffmischung enthält 60 bis 95 Gew.-%, vorzugsweise 79 bis 95 Gew.-%, an linearem, hochmolekularem Polyester und 5 bis 40 Gew.-%, vorzugsweise 5 bis 21 Gew.-%, an Olefincopolymeren.

Die Kunststoffmischung kann auf üblichen Maschinen durch Spritzguß oder Extrusion zu Formmassen verarbeitet werden.

Die Formmassen können Hilfs- und Zusatzstoffe enthalten. Hierfür kommen z. B. Nucleierungs-, Mattierungs-, Fließmittel oder andere Verarbeitungshilfsmittel sowie Pigmente, Füll- und Verstärkungsstoffe in Frage.

Nucleierungs-, Mattierungs-, Fließmittel oder andere Verarbeitungsmittel sind in Mengen bis zu 6 Gew.-%, bevorzugt von 0,2 bis 3,5 Gew.-%, in der Formmasse enthalten. Pigmente, Füll- und Verstärkungsstoffe sind in Mengen bis zu 60 Gew.-%, bevorzugt von 1 bis 50 Gew.-%, in der Formmasse enthalten.

Bei Verwendung der erfindungsgemäßen Kunststoffmischungen können Formteile, insbesondere für den elektrotechnischen Bereich, hergestellt werden, die eine besonders hohe Vergleichszahl der Kriechwegbildung aufweisen.

Die in der Beschreibung und in den Beispielen angeführten Parameter wurden mit Hilfe der nachstehend genannten Meßmethoden bestimmt.

Die **Bestimmung der Lösungsviskosität** (J-Wert) **des Polyesters** erfolgt an einer 0,5 Gew.-%igen Phenol/o-Dichlorbenzol-Lösung (Gewichtsverhältnis 1 : 1) bei 25 °C gemäß DIN 53 728/ISO 1628/5 - Teil 5.

Die **Bestimmung des Schmelzindex** (MVI-Wert) erfolgt an einer Schmelze des Olefincopolymeren bei 190 °C und einer Belastung von 2,16 kg (ISO 1133).

**Die Bestimmung der Vergleichszahl** (CTI-Wert) der Kriechwegbildung erfolgt an einem Prüfkörper (Abmessung: 15 x 15 mm, 3 mm dick). Die Oberfläche der Probe muß frei von Verschmutzung (Fingerabdrücke, Fett, Öl etc.) sein. Oberhalb der Oberfläche sind senkrecht zwei Elektroden, die symmetrisch zur Senkrechten einen Winkel von 60 ° bilden, in einem Abstand von 4 ± 0,1 mm zueinander angeordnet. Beide Elektroden liegen auf der Oberfläche des Prüfkörpers auf (Auflagekraft: 1 ± 0,05 N).

Als Prüflösung wird eine 0,1 ± 0,002 Gew.-%ige Lösung von Ammoniumchlorid in destilliertem oder deionisiertem Wasser verwendet.

In einem Zeitabstand von 30 ± 5 sec. wird die Prüflösung tropfenweise zwischen die Elektroden aufgebracht.

Als Vergleichszahl der Kriechwegbildung (CTI-Wert) wird derjenige Zahlenwert der angelegten Spannung bezeichnet, bei dem nach Aufbringen von 50 Tropfen Prüflösung die Spannung gerade noch nicht zusammenbricht. Dieser Wert gilt jedoch nur, wenn an 5 weiteren Stellen der Probekörperoberfläche nach 100 aufgebrachten Tropfen und einer um 25 Volt erniedrigten Spannung, kein Zusammenbruch der Spannung erfolgt.

Die beschriebene Messung erfolgt gemäß DIN/IEC 112 (VDE 0303/Teil 1).

Die mit Buchstaben gekennzeichneten Versuche sind nicht erfindungsgemäß.

### Beispiele

### Beispiel 1

### Glasfaserverstärkte Formmassen

Zusammensetzung: 80 Gew.-Teile Polybutylenterephthalat (J-Wert: 107 cm³/g)
20 Gew.-Teile Ethylen/Acrylsäureester/Glycidylmethacrylat-Terpolymerisat (MVI-Wert: 6 g/10 min.) (LOTADER® AX 8660)
25,5 Gew.-Teile Glasfasern (Typ OCF 429 YZ)
0,5 Gew.-Teile Bisphenol A/Epichlorhydrin - Epoxidharz (EPIKOTE® 1004)
0,5 Gew.-Teile Phenolisches Antioxidans (IRGANOX® 1010)
0,5 Gew.-Teile Oxidiertes Polyethylenwachs (VESTOWAX® AO 1539)
Vergleichszahl der Kriechwegbildung: CTI-Wert: 600

### Beispiel A

Zusammensetzung: 100 Gew.-Teile Polybutylenterephthalat (J-Wert: 107 cm³/g)
25,5 Gew.-Teile Glasfasern (Typ OCF 429 YZ)
0,5 Gew.-Teile Bisphenol A/Epichlorhydrin - Epoxidharz (EPIKOTE® 1004)
0,5 Gew.-Teile Phenolisches Antioxidans (IRGANOX® 1010)
0,5 Gew.-Teile Oxidiertes Polyethylenwachs (VESTOWAX® AO 1539)
Vergleichszahl der Kriechwegbildung: CTI-Wert: 375

### Beispiel 2

### Füllstoff enthaltende Formmassen

Zusammensetzung: 80 Gew.-Teile Polybutylenterephthalat (J-Wert: 107 cm³/g)
20 Gew.-Teile Ethylen/Acrylsäureester/Glycidylmethacrylat-Terpolymerisat (MVI-Wert: 6 g/10 min.) (LOTADER® AX 8660)
43 Gew.-Teile aminosilanisiertes Aluminiumsilikat (Kaolin)
0,5 Gew.-Teile Bisphenol A/Epichlorhydrin - Epoxidharz (EPIKOTE® 1004)
0,5 Gew.-Teile Phenolisches Antioxidans (IRGANOX® 1010) 0,5 Gew.-Teile Oxidiertes Polyethylenwachs (VESTOWAX® AO 1539)
Vergleichszahl der Kriechwegbildung: CTI-Wert: 600

### Beispiel B

Zusammensetzung: 100 Gew.-Teile Polybutylenterephthalat (J-Wert: 107 cm³/g)
43 Gew.-Teile aminosilanisiertes Aluminiumsilikat (Kaolin)
0,5 Gew.-Teile Bisphenol A/Epichlorhydrin - Epoxidharz (EPIKOTE® 1004)
0,5 Gew.-Teile Phenolisches Antioxidans (IRGANOX® 1010)
0,5 Gew.-Teile Oxidiertes Polyethylenwachs (VESTOWAX® AO 1539)
Vergleichszahl der Kriechwegbildung: CTI-Wert: 300 (250)

## Patentansprüche

1. Verwendung einer Kunststoffmischung aus
A. 60 bis 95 Gew.-% eines linearen, hochmolekularen Polyesters
und
B. 5 bis 40 Gew.-% eines Olefincopolymeren aufgebaut aus
a. 50 bis 84,5 Gew.-% einer ungesättigten Verbindung mit 2 bis 6 C-Atomen in der Kohlenstoffkette
b. 15 bis 35 Gew.-% eines Acrylates der Formel 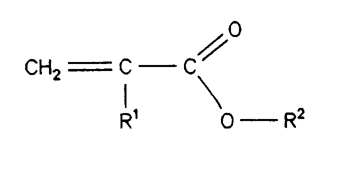 mit
R¹ = H oder C₁₋₆-Alkyl und
R² = C₁₋₈-Alkyl
c. 0,5 bis 15 Gew.-% einer ungesättigten Verbindung mit einer Säure-, Anhydrid- und/oder Epoxidgruppe als reaktiver Gruppe
zur Herstellung von Formmassen mit hoher Vergleichszahl der Kriechwegbildung.

2. Verwendung einer Kunststoffmischung gemäß Anspruch 1 aus
A. 79 bis 95 Gew.-% eines linearen, hochmolekularen Polyesters
und
B. 5 bis 21 Gew.-% eines Olefincopolymeren.

3. Verwendung einer Kunststoffmischung gemäß den Ansprüchen 1 und 2, wobei ein Olefincopolymeres aufgebaut aus
a. 60 bis 75 Gew.-% ungesättigte Verbindung
b. 23 bis 30 Gew.-% (Alkyl)acrylat
c. 2 bis 10 Gew.-% ungesättigte Verbindung mit reaktiven Gruppen
eingesetzt wird.

4. Verwendung einer Kunststoffmischung gemäß den Ansprüchen 1 bis 3, wobei als ungesättigte Verbindung Ethylen eingesetzt wird.

5. Verwendung einer Kunststoffmischung gemäß den Ansprüchen 1 bis 3, wobei als ungesättigte Verbindung Propylen eingesetzt wird.

6. Verwendung einer Kunststoffmischung gemäß den Ansprüchen 1 bis 5, wobei als (Alkyl)acrylat ein Acrylsäureester eingesetzt wird.

7. Verwendung einer Kunststoffmischung gemäß den Ansprüchen 1 bis 5, wobei als (Alkyl)acrylat ein Ethylacrylsäureester eingesetzt wird.

8. Verwendung einer Kunststoffmischung gemäß den Ansprüchen 1 bis 7, wobei als ungesättigte, reaktive Gruppen aufweisende Verbindung Maleinsäure(anhydrid) eingesetzt wird.

9. Verwendung einer Kunststoffmischung gemäß den Ansprüchen 1 bis 7, wobei als ungesättigte, reaktive Gruppen aufweisende Verbindung Glycidylmethacrylmethylester eingesetzt wird.

10. Verwendung der Kunststoffmischungen gemäß den Ansprüchen 1 bis 9 für elektrotechnische Formteile.
